# EUROPÄISCHE PATENTSCHRIFT

(11) **EP 1 411 285 B1**
(45) Veröffentlichungstag und Bekanntmachung des Hinweises auf die Patenterteilung: **28.12.2005**
(21) Anmeldenummer: 03450221.1
(22) Anmeldetag: 01.10.2003
(51) Int. Cl.: F16K 31/00

(54) **Piezoelektrisches Ventil**
Piezoelectric valve
Soupape piézo-électrique

(30) Priorität: 15.10.2002 AT 15562002
(43) Veröffentlichungstag der Anmeldung: 21.04.2004
(73) Patentinhaber: Hoerbiger Automatisierungstechnik Holding GmbH, 86972 Altenstadt (DE); Honeywell GmbH, 7821 AJ Emmen (NL)
(72) Erfinder: Strasser, Günther, 82409 Wildsteig (DE); Vollmer, Josef, 86975 Bernbeuren (DE); Schaible, Jochen, 72213 Altensteig (DE)
(74) Vertreter: Laminger, Norbert

(56) Entgegenhaltungen:
- EP-A- 0 922 893
- DE-A- 19 547 149
- DE-A- 19 720 849

## Beschreibung

Die Erfindung betrifft ein Ventil mit einem auslenkbaren Betätigungselement, welches die Bewegungen zumindest eines eigentlichen Dichtelementes zum Öffnen bzw. Schließen zumindest einer Dichtkontur steuert, wobei das Betätigungselement durch ein elastisches Element im wesentlichen senkrecht zur Auslenkrichtung beaufschlagt ist, wobei die Längsachse des Betätigungselementes und die durch das elastische Element ausgeübte Kraft in einer Position des Betätigungselementes zwischen seinen beiden Extrempositionen fluchten.

Bei vielen Arten von Ventilen ist das Dichtelement oder ein dieses Dichtelement bewegendes Betätigungselement in eine der beiden Richtungen mittels beispielsweise elastischer Elemente vorgespannt. Die Vorspannung kann eventuell auch durch die Kräfte hervorgerufen werden, die bei der Auslenkung des Dicht- oder Betätigungselementes entstehen. Meist wird dadurch aber auch die Schaltdynamik des Ventils zumindest in eine Richtung nachteilig beeinflußt und viel Leistungsaufnahme des Ventils wird für die Überwindung dieser Vorspannung benötigt.

Andererseits sind auch Ventilkonstruktionen bekannt, bei welchen durch die Geometrie des Dicht- oder Betätigungselementes - allenfalls unter Zuhilfenahme von zumindest einem Federelement - die beiden Endlagen durch Vorspannung stabil gehalten sind, während zum Umschalten die Kraft eines elastischen Elementes überwunden werden muß, wobei nach Durchlaufen eines ersten Abschnittes des gesamten Arbeitshubes das elastische Element das weitere Umschalten unterstützt. Ein Beispiel für ein derartiges Ventil ist in der DE 197 20 849 A1 beschrieben, wo zum Umschalten zwei Aktoren vorgesehen sind, die auf das Trägerelement für das eigentliche Dichtelement einwirken.

Die Aufgabe der Erfindung ist ein mit geringer Betätigungskraft, d.h. mit geringen Strömen elektrisch schaltbares Ventil, welches sich besonders durch kleine Baugröße auszeichnet, dennoch aber sehr hohe Dichtkraft bei bestmöglicher Schaltdynamik bietet.

Zur Lösung dieser Aufgabe ist erfindungsgemäß vorgesehen, daß das Betätigungselement als einseitig eingespannter piezoelektrischer Biegewandler und das Dichtelement als um eine senkrecht zur Richtung der Auslenkung des Betätigungselementes liegende Achse schwenkbarer Kipphebel ausgeführt ist. Diese an sich bekannten Biegewandler bieten durch ihre bei geringer Ansteuerleistung doch sehr hohe Kraftdichte und gute Schaltdynamik alle Voraussetzungen für großen Hub bei geringsten Dimensionen. Zusammen mit der Unterstützung des Haltens des Kipphebels in einer Schaltstellung, in der der Biegewandler in Ruheposition ist, kann in dieser Stellung eine sichere Halte- und auch Dichtwirkung sichergestellt werden, und ohne dass der Schaltvorgang beeinträchtigt und die dafür aufzuwendende Energie wesentlich erhöht wird, geringfügige Verstellungen des Biegewandlers die Dichtwirkung beeinträchtigen könnten, wie etwa bei Konstruktionen mit direkt auf den Dichtsitz wirkenden Betätigungselementen. Selbst ein Setzen der eigentlichen Dichtfläche verändert nicht den Abstand des Betätigungselementes vom Kipphebel in Betätigungsrichtung und somit bleibt die Nullposition erhalten. Überdies können über die geometrischen Verhältnisse Dichtkraft, Arbeitshub des Dichtelementes und dgl. an die Anforderungen in der Praxis angepaßt werden.

Gemäß einer vorteilhaften Ausführungsform der Erfindung ist vorgesehen, dass die Achse des Kipphebels im wesentlichen mit einer Dichtkante zusammenfällt, die Teil der zumindest einen Dichtkontur ist. Durch diese axiale Lagerung des Kipphebels kann ein Verschiebe des Kipphebels zur Dichtkontur verhindert werden und sie ermöglicht auch ein Setzen des Dichtmaterials, ohne dadurch die Dichtwirkung zu beeinträchtigen.

Gemäß einem weiteren Merkmal der Erfindung ist die Dichtkante ein zwei Dichtkonturen gemeinsamer, zentraler Abschnitt.

Dabei ist vorteilhafterweise vorgesehen, daß die Dichtkante als Schnittlinie zweier im wesentlichen ebenen Dichtkonturen vorliegt, wobei die die Dichtkonturen enthaltenden Dichtebenen miteinander einen stumpfen Winkel einschließen. Dabei kann sich die Dichtfläche in ihrer Lage genau der jeweiligen Dichtkontur anpassen, ohne Beeinträchtigung durch die jeweils andere Dichtkontur, sodaß geringste Leckagewerte zu realisieren sind.

Vorzugsweise ist dabei vorgesehen, dass der Kipphebel und der Biegewandler jeweils eine Anlenkstelle für das elastische Element aufweisen und dieses Element zwischen Kipphebel und Biegewandler eingespannt.

Eine weitere vorteilhafte Ausführungsform der Erfindung sieht vor, dass der Angriffspunkt des Biegewandlers am Kipphebel außerhalb der Ebene(n) der Dichtkontur liegt. Damit kann die vom Biegewandler ausübbare Kraft am günstigsten zur Geltung gebracht werden.

Gemäß einer anderen Variante kann auch der Angriffspunkt des elastischen Elementes am Kipphebel außerhalb der durch den Angriffspunkt des Biegewandlers am Kipphebel und die Dichtkante definierten Ebene liegen.

Vorteilhafterweise ist in einer weiteren Ausführungsform der Erfindung vorgesehen, daß am Kipphebel zumindest zwei, in Längsrichtung des Biegewandlers voneinander beabstandete Angriffspunkte für den Biegewandler vorgesehen sind. Damit kann eine abknickende Ventilcharakteristik erreicht werden.

Bestmögliche Dichtwirkung in zumindest einer Schaltstellung des erfindungsgemäßen Ventils ist dadurch zu erzielen, daß der Kipphebel durch das elastische Element auf eine Dichtkontur vorgespannt ist und durch Auslenkung des Biegewandlers aus der Ruhestellung heraus von dieser Dichtkontur abhebbar ist.

Gemäß einer weiteren erfindungsgemäßen Ausführungsform ist vorgesehen, daß der Kipphebel durch das elastische Element auf eine Dichtkontur vorgespannt ist und durch Auslenkung des Biegewandlers aus der Ruhestellung heraus von dieser Dichtkontur abhebbar ist und in der ausgelenkten Extremposition des Biegewandlers an der zweiten Dichtkontur dichtend anliegt.

Vorteilhafterweise kann der Kipphebel eine Vertiefung aufweisen, in welche ein Ende des Biegewandlers eingreift, um derart die Rückstellkraft des Biegewandlers optimal für das Schalten des Ventils zu nutzen.

In der nachfolgenden Beschreibung soll die Erfindung anhand der in den beigefügten Zeichnungen dargestellten Ausführungsbeispiele näher erläutert werden.

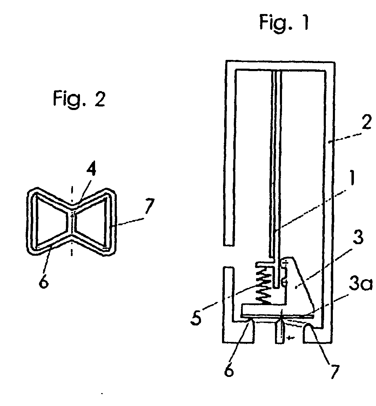

Die Fig. 1 zeigt in schematischer Darstellung einen Querschnitt durch eine Ausführungsform eines erfindungsgemäßen Ventils in 3/2-Wege-Ausführung und die Fig. 2 stellt eine Draufsicht auf die Dichtkonturen des Ventils der Fig. 1 dar.

Ein piezoelektrischer Biegewandler 1 ist an einem Ende in einer Einspannstelle im Gehäuse 2 des Ventils oder einer damit verbundenen Strukturgehalten. In der in Fig. 1 dargestellten Ruhelage, in der keine Spannung angelegt ist, ist ein geringes Spiel zwischen dem Biegewandler 1 und einen Kipphebel 3 als eigentliches Dichtelement vorhanden, so dass geringe Veränderungen in der Lage des Biegewandlers 1 in axialer aber auch in Auslenkrichtung die Dichtwirkung nicht nachteilig beeinflussen können.

Der Kipphebel 3 liegt auf einer Dichtkante 4 auf, welche nahezu deckungsgleich mit seiner Schwenkachse ist. Dabei wird der Kipphebel 3 durch ein elastisches Element, vorzugsweise eine auf Druck beanspruchte Schraubenfeder 5 auf eine erste Dichtkontur 6 angepreßt, wobei sich die eigentliche Dichtfläche 3a der Dichtkontur 6 genau anpassen kann. Diese Schraubenfeder 5 ist zwischen dem Biegewandler 1 und dem Kipphebel 3 eingespannt, vorzugsweise an beiden Bauteilen beweglich angelenkt, und wirkt parallel zur Längsachse des Biegewandlers 1.

Die Dichtwirkung ist in dieser Schaltstellung durch die mechanischen Eigenschaften des Biegewandlers 1 in Längsrichtung und durch die Wirkung der Schraubenfeder 5 gegeben, die mit dem Biegewandler 1 im wesentlichen fluchtend angeordnet ist, bzw. nur einen stumpfen Winkel nahe 180° mit diesem einschließt, d.h. senkrecht zur Auslenkrichtung des Biegewandlers 1 wirkt.

Durch Anbringung von beispielsweise zwei Angriffspunkten des Biegewandlers 1 am Kipphebel 3, die in der Längsrichtung des Biegewandlers 1 voneinander beabstandet sind, kann durch die dadurch entstehende Änderung des Angriffspunktes des Biegewandlers 1 und damit der Hebelverhältnisses am Kipphebel 3 eine abknickende Ventilcharakteristik erzeugt werden. Das heißt, im Verhältnis zur Auslenkung des Betätigungselements machtbei gleichem Auslenkungshub des Biegewandlers 1 der Kipphebel 3 zuerst bei Kontakt des Biegewandlers 1 mit dem weiter von der Dichtkante 4 beabstandeten Angriffspunkt am Kipphebel 3 eine geringe Bewegung und bei Kontakt mit dem zweiten, näher der Dichtkante 4 gelegenen Angriffspunkt eine große Bewegung. Dies ermöglicht eine bessere Anpassung an ein Gesamtsystem mit nichtlinearer Charakteristik, wobei eine bessere Auflösung bei gleichen Ansteuerbereich erreicht wird.

Bei Anlegen einer Spannung wird der Biegewandler 1 in Fig. 1 nach rechts hin ausgelenkt. Dabei arbeitet er gegen die Schraubenfeder 5 und nimmt schließlich eine ausgelenkte Extremposition ein, in welcher der Kipphebel 3 und seine eigentliche Dichtfläche 3a auf die zweite Dichtkontur 7 gepreßt werden, während die erste Dichtkontur 6 freigegeben ist. Beim Ausschalten der Spannung kehrt der Biegewandler 1 durch seine Elastizität in seine Ruhelage zurück, wobei diese Rückkehrbewegung durch die Wirkung der Schraubenfeder 5 unterstützt wird. Zum Ende der Rückkehrbewegung hebt der Biegewandler 1 vorzugsweise wieder vom Kipphebel 3 ab und die zwischen Biegewandler 1 und Kipphebel 3 eingespannte Schraubenfeder 5 preßt den Kipphebel 3 wieder auf die erste Dichtkontur 6, während die zweite Dichtkontur 7 wieder freigegeben wird.

Wie in Fig. 1 zu erkennen ist, sind die beiden Dichtkonturen 6, 7 jeweils eben ausgebildet und die die Dichtkonturen 6, 7 enthaltenden Dichtebenen schließen vorteilhafterweise miteinander einen stumpfen Winkel ein. Damit können die den Dichtkonturen 6, 7 zugewandte Seite des Kipphebels 3 und dessen Dichtfläche 3a in einfacher Weise eben ausgeführt sein. Prinzipiell wäre auch eine gemeinsame Ebene für beide Dichtkonturen 6, 7 und dafür eine stumpf keilförmige Ausbildung der Unterseite des Kipphebels 3 und/oder seiner Dichtfläche 3a denkbar. In beiden Fällen kann sich die Dichtfläche 3a in beiden Schaltstellungen des Ventils der jeweiligen Dichtkontur 6 bzw. 7 anpassen, ohne Beeinflussung durch die jeweils andere Dichtkontur.

Die Reibung der Lagerung des Kipphebels 3 ist durch die Ausbildung als Dichtkante 4 weitgehend vermindert, und auch die Reibung an den Angriffspunkten des elastischen Elementes 5, die auch als Blechbiegeteil ausgebildet sein könnte, am Kipphebel 3 bzw. dem Biegewandler 1 kann durch Ausbildung dieser Lager bzw. Angriffspunkte als Schneidkanten vermindert werden.

Während das Ventil in der dargestellten Varianten ein 3/2-Wegeventil ist, kann durch verschließen oder gänzliches Weglassen einer der beiden Dichtkonturen 6, 7 eine vereinfachte Ausführungsform mit nur eine steuerbaren Dichtkontur damit ein 2/2-Wegeventile realisiert werden.

## Patentansprüche

1. Ventil mit einem auslenkbaren Betätigungselement (1), welches die Bewegungen zumindest eines eigentlichen Dichtelementes (3) zum Öffnen bzw. Schließen zumindest einer Dichtkontur (6) steuert, wobei das Betätigungselement durch ein elastisches Element (5) im wesentlichen senkrecht zur Auslenkrichtung beaufschlagt ist, wobei die Längsachse des Betätigungselementes und die durch das elastische Element ausgeübte Kraft in einer Position des Betätigungselementes zwischen seinen beiden Extrempositionen fluchten, **dadurch gekennzeichnet, daß** das Betätigungselement (1) als einseitig eingespannter piezoelektrischer Biegewandler und das Dichtelement (3) als um eine senkrecht zur Richtung der Auslenkung des Betätigungselementes (1) liegende Achse schwenkbarer Kipphebel ausgeführt ist.

2. Ventil nach Anspruch 1, **dadurch gekennzeichnet, daß** die Achse des Kipphebels (3) im wesentlichen mit einer Dichtkante (4) zusammenfällt, die Teil der zumindest einen Dichtkontur (6) ist.

3. Ventil nach Anspruch 2, **dadurch gekennzeichnet, daß** die Dichtkante (4) ein zwei Dichtkonturen (6, 7) gemeinsamer, zentraler Abschnitt ist.

4. Ventil nach Anspruch 3, **dadurch gekennzeichnet, daß** die Dichtkante (4) als Schnittlinie zweier im wesentlichen ebenen Dichtkonturen (6, 7) vorliegt, wobei die die Dichtkonturen (6, 7) enthaltenden Dichtebenen miteinander einen stumpfen Winkel einschließen.

5. Ventil nach einem der Ansprüche 1 bis 4, **dadurch gekennzeichnet, daß** der Kipphebel (3) und der Biegewandler (1) jeweils eine Anlenkstelle für das elastische Element (5) aufweisen und dieses Element (5) zwischen Kipphebel (3) und Biegewandler (1) eingespannt ist.

6. Ventil nach einem der Ansprüche 1 bis 5, **dadurch gekennzeichnet, daß** der Angriffspunkt des Biegewandlers (1) am Kipphebel (3) außerhalb der Ebene(n) der Dichtkontur (6 bzw. 7) liegt.

7. Ventil nach einem der Ansprüche 1 bis 6, **dadurch gekennzeichnet, daß** der Angriffspunkt des elastischen Elementes (5) am Kipphebel (3) außerhalb der durch den Angriffspunkt des Biegewandlers (1) am Kipphebel (3) und die Dichtkante (4) definierten Ebene liegt.

8. Ventil nach einem der Ansprüche 1 bis 7, **dadurch gekennzeichnet, daß** am Kipphebel (3) zumindest zwei, in Längsrichtung des Biegewandlers (1) voneinander beabstandete Angriffspunkte für den Biegewandler (1) vorgesehen sind.

9. Ventil nach einem der Ansprüche 1 bis 8, **dadurch gekennzeichnet, daß** der Kipphebel (3) durch das elastische Element (5) auf eine Dichtkontur (6,7) vorgespannt ist und durch Auslenkung des Biegewandlers (1) aus der Ruhestellung heraus von dieser Dichtkontur (6,7) abhebbar ist.

10. Ventil nach Anspruch 9, **dadurch gekennzeichnet, daß** der Kipphebel (3) durch das elastische Element (5) auf eine Dichtkontur (6) vorgespannt ist und durch Auslenkung des Biegewandlers (1) aus der Ruhestellung heraus von dieser Dichtkontur (6) abhebbar ist und in der ausgelenkten Extremposition des Biegewandlers (1) an der zweiten Dichtkontur (7) dichtend anliegt.

11. Ventil nach einem der Ansprüche 1 bis 10, **dadurch gekennzeichnet,daß** der Kipphebel (3) eine Vertiefung aufweist, in welche ein Ende des Biegewandlers (1) eingreift.

## Claims

1. A valve with an actuating element (1) capable of deviating which controls the movements of at least one actual sealing element (3) in order to open or close at least one sealing profile (6), wherein the actuating element is acted upon by a resilient element (5) substantially at a right angle to the deviation direction, wherein the longitudinal axis of the actuating element and the force exerted by the resilient element are in alignment in a position of the actuating element between its two end positions, **characterized in that** the actuating element (1) is designed in the form of a piezoelectric bending transducer clamped at one end and the sealing element (3) is designed in the form of a rocker lever pivotable about an axis situated at a right angle to the direction of the deviation of the actuating element (1).

2. A valve according to Claim 1, **characterized in that** the axis of the rocker lever (3) substantially coincides with a sealing edge (4) which is part of the at least one sealing profile (6).

3. A valve according to Claim 2, **characterized in that** the sealing edge (4) is a central portion common to two sealing profiles (6, 7).

4. A valve according to Claim 3, **characterized in that** the sealing edge (4) is present as an intersection line of two substantially flat sealing profiles (6, 7), wherein the sealing planes containing the sealing profiles (6, 7) form an obtuse angle with each other.

5. A valve according to one of Claims 1 to 4, **characterized in that** the rocker lever (3) and the bending transducer (1) in each case have an articulation point for the resilient element (5), and the said element (5) is clamped between the rocker lever (3) and the bending transducer (1).

6. A valve according to one of Claims 1 to 5, **characterized in that** the engagement point of the bending transducer (1) on the rocker lever (3) is situated outside the plane or planes of the sealing profile (6 or 7 respectively).

7. A valve according to one of Claims 1 to 6, **characterized in that** the engagement point of the resilient element (5) on the rocker lever (3) is situated outside the plane defined by the engagement point of the bending transducer (1) on the rocker lever (3) and by the sealing edge (4).

8. A valve according to one of Claims 1 to 7, **characterized in that** at least two engagement points spaced from each other in the longitudinal direction of the bending transducer (1) are provided for the bending transducer (1) on the rocker lever (3).

9. A valve according to one of Claims 1 to 8, **characterized in that** the rocker lever (3) is biased against a sealing profile (6, 7) by the resilient element (5) and is capable of being lifted off the said sealing profile (6, 7) by the deviation of the bending transducer (1) out of the rest position.

10. A valve according to Claim 9, **characterized in that** the rocker lever (3) is biased against a sealing profile (6) by the resilient element (5) and is capable of being lifted off the said sealing profile (6) by the deviation of the bending transducer (1) out of the rest position and rests on the second sealing profile (7) in a sealed manner in the deviating end position of the bending transducer (1).

11. A valve according to one of Claims 1 to 10, **characterized in that** the rocker lever (3) has a depression into which one end of the bending transducer (1) engages.

## Revendications

1. Soupape comportant un élément d'actionnement (1) pouvant être dévié, qui commande les déplacements d'au moins un élément d'étanchéité particulier (3) pour ouvrir et fermer au moins un contour d'étanchéité (6), l'élément d'actionnement étant chargé par un élément élastique (5) essentiellement perpendiculairement à la direction de déviation, et l'axe longitudinal de l'élément d'actionnement et la force appliquée par l'élément élastique étant alignés pour une position de l'élément d'actionnement se situant entre ses deux positions extrêmes, **caractérisée en ce que** l'élément d'actionnement (1) est agencé sous la forme d'un transducteur piézoélectrique de flexion, encastré d'un côté et que l'élément d'étanchéité (3) est agencé sous la forme d'un levier pivotant pouvant pivoter autour d'un axe qui est disposé perpendiculairement à la direction de déviation de l'élément d'actionnement (1).

2. Soupape selon la revendication 1, **caractérisée en ce que** l'axe du levier basculant (3) coïncide pour l'essentiel avec une arête d'étanchéité (4), qui fait partie d'au moins un contour d'étanchéité (6).

3. Soupape selon la revendication 2, **caractérisée en ce que** l'arête d'étanchéité (4) est une section centrale, commune à deux contours d'étanchéité (5, 6).

4. Soupape selon la revendication 3, **caractérisée en ce que** ce que l'arête d'étanchéité (4) est agencée sous la forme d'une ligne de coupe de deux contours d'étanchéité essentiellement plats (6, 7), les contours d'étanchéité (6, 7) faisant entre eux un angle obtus.

5. Soupape selon l'une des revendications 1 à 4, **caractérisée en ce que** le levier basculant (3) et le transducteur de flexion (1) comportent chacun un point d'articulation pour l'élément élastique (5) et que cet élément (5) est encastré entre le levier basculant (3) et le transducteur de flexion (1).

6. Soupape selon l'une des revendications 1 à 5, **caractérisée en ce que** le point d'attaque du transducteur de flexion (1) est situé sur le levier basculant (3) à l'extérieur du ou des plans des contours d'étanchéité (6, 7).

7. Soupape selon l'une des revendications 1 à 6, **caractérisée en ce que** le point d'attaque de l'élément élastique (5) est situé sur le levier basculant (3) à l'extérieur du plan défini par le point d'attaque du transducteur de flexion (1) sur le levier basculant (3) et l'arête d'étanchéité (4).

8. Soupape selon l'une des revendications 1 à 7, **caractérisée en ce que** sur le levier basculant sont prévus au moins deux points d'attaque pour le transducteur de flexion (1), qui sont distants l'un de l'autre dans une direction longitudinale du transducteur de flexion.

9. Soupape selon les revendications 1 à 8, **caractérisée en ce que** le levier basculant (3) est précontraint par l'élément élastique (5) contre un contour d'étanchéité (6, 7) et peut être écarté de ce contour d'étanchéité (6, 7) par déviation du transducteur de flexion (1) à partir de la position de repos.

10. Soupape selon la revendication 9, **caractérisée en ce que** le levier basculant (3) est précontraint par l'élément élastique (5) contre un contour d'étanchéité (6) et peut être écarté de ce contour d'étanchéité (6) par déviation du transducteur de flexion (1) à partir de la position de repos et, lorsque le transducteur de flexion (1) est dans la position de déviation extrême, s'applique sur le second contour d'étanchéité (7).

11. Soupape selon l'une des revendications 1 à 10, **caractérisée en ce que** le levier basculant (3) comporte un renfoncement, dans lequel s'engage une extrémité du transducteur de flexion (1).
